# DEMANDE DE BREVET EUROPEEN

(11) **EP 4 383 487 A1**
(43) Date de publication de la demande: **12.06.2024**
(21) Numéro de dépôt: 22306801.6
(22) Date de dépôt: 07.12.2022
(51) Int. Cl.: H02G 1/02

(54) **PROCÉDÉ DE RÉPARATION D'UN CÂBLE CONDUCTEUR D ÉLECTRICITÉ, CÂBLE CONDUCTEUR RÉSULTANT**

(71) Demandeur: RTE RESEAU DE TRANSPORT D'ELECTRICITE, 92073 Paris La Défense Cedex (FR)
(72) Inventeur: TRUFFET, Benoît, 92073 Paris La Défense Cedex (FR)
(74) Mandataire: Bonnet, Michel

(57) **Abrégé**

Ce procédé de réparation d'un câble (30) conducteur d'électricité, le câble conducteur (30) comportant une pluralité de brins conducteurs enroulés en au moins un toron et une partie de ces brins conducteurs étant sectionnée au moins en surface externe du câble conducteur (30) sur une portion longitudinale limitée (36) du câble conducteur (30) de sorte que cette portion longitudinale limitée (36) comporte les deux extrémités sectionnées de chaque brin conducteur sectionné, comporte l'enroulement (112, 114) d'une première couche (38) de garniture préformée de réparation à brins conducteurs autour et au contact électromécanique de la portion longitudinale limitée (36) du câble conducteur (30) comportant lesdites extrémités sectionnées de chaque brin conducteur sectionné. Il comporte en outre l'enroulement (118, 120) d'une deuxième couche (40) de garniture préformée de réparation à brins conducteurs autour et au contact électromécanique de la première couche (38) de garniture préformée.

## Description

La présente invention concerne un procédé de réparation d'un câble conducteur d'électricité. Elle concerne également un câble conducteur d'électricité résultant d'une telle réparation.

Elle s'applique en particulier mais non exclusivement aux câbles conducteurs permettant le transport et/ou la distribution de courant électrique à haute tension ou très haute tension par voie aérienne, dits « câbles d'énergie », ou aux câbles conducteurs dont la fonction principale n'est pas à proprement parler le transport et/ou la distribution de courant électrique mais plutôt la protection d'un réseau de transport ou de distribution d'électricité contre les effets de la foudre, dits « câbles de garde » ou « câbles de terre ». Ces câbles comportent une pluralité de brins conducteurs enroulés en au moins un toron.

On distingue les câbles à toron simple, dits câbles spiralés, et les câbles à torons multiples, dits câbles toronnés. Un câble spiralé se compose d'une ou plusieurs couches de brins enroulés en hélice autour d'un brin central. Lorsqu'il comporte plusieurs couches, celles-ci sont alternativement enroulées hélicoïdalement en sens inverses. Les câbles spiralés conviennent par exemple comme éléments de tension et de maintien. Ils conviennent aussi pour le transport et la distribution de courant électrique ou comme câbles de garde : dans ce cas, la dernière couche de brins conducteurs est généralement au contact de l'environnement extérieur et le câble est qualifié de « nu ». Un câble toronné se compose d'une ou plusieurs couches de torons qui sont eux-mêmes des câbles spiralés généralement nus. Les torons sont enroulés en hélice autour d'un noyau. Le noyau est également appelé insert ou coeur et peut être constitué d'un noyau en fibre ou en acier. Les câbles toronnés sont principalement utilisés pour les charges dynamiques et mécaniques.

Les lignes aériennes de transport et/ou de distribution de courant électrique alternatif à haute tension ou très haute tension sont généralement constituées de câbles conducteurs spiralés nus à brins en aluminium ou alliage d'aluminium montés sur pylônes et maintenus en tension au-delà d'une certaine hauteur minimale pour des raisons de sécurité liées à des gradients de potentiel élevés, notamment supérieurs à 10 kV/cm.

Ces câbles conducteurs nus tendus entre pylônes, ou entre un pylône et une installation de poste électrique de réseau de transport ou de distribution d'électricité, sont soumis à des dégradations telles que des impacts lors d'orages, des agressions externes ou internes telles que des contacts accidentels, des contacts phase/phase ou phase/masse, des impacts de balles de fusils, des dégradations dues aux matériels de lignes tels que des entretoises, des balises, etc. Chaque dégradation prend alors la forme d'au moins un brin sectionné au moins en surface externe du câble conducteur impacté, sur une portion longitudinale limitée du câble conducteur, de sorte que cette portion longitudinale limitée comporte les deux extrémités sectionnées de chaque brin conducteur sectionné. En fonction du nombre de brins sectionnés, plusieurs types de réparations sont indiqués.

Selon une première famille de procédés de réparation généralement préconisés par les sociétés gestionnaires de réseaux de transport et distribution d'électricité, le procédé comporte l'enroulement d'une couche de garniture préformée de réparation à brins conducteurs autour et au contact électromécanique de la portion longitudinale limitée du câble conducteur comportant les extrémités sectionnées de chaque brin conducteur sectionné. Il peut s'agir d'une couche de simple garniture de câble, lorsque le nombre de brins sectionnés sur la couche externe de câble correspond à une perte inférieure à 5 % de la charge de rupture du câble conducteur. Il peut aussi s'agir d'une couche de « préformé de réparation » lorsque la proportion de brins sectionnés sur la couche externe de câble ne dépasse pas 33%. On notera qu'un préformé de réparation est d'aspect identique à une simple garniture de câble, mais à brins plus longs et plus gros pour une même section de câble conducteur. Quel que soit le procédé de réparation choisi dans cette première famille, il ne peut plus être exécuté lorsque le nombre de brins sectionnés dépasse les limites prescrites par le gestionnaire du réseau.

Selon une deuxième famille de procédés de réparation généralement préconisés par les sociétés gestionnaires de réseaux de transport et distribution d'électricité lorsque la première famille précitée ne peut pas être appliquée, le procédé de réparation consiste à sectionner complètement le câble dans la portion longitudinale limitée, en au moins un endroit de dégradation, pour y insérer au moins un manchon de jonction. Selon une première variante, le câble conducteur est sectionné en un seul endroit et un unique manchon de jonction est interposé puis comprimé, à l'aide d'une presse hydraulique, pour réparer et rétablir les propriétés du câble conducteur. Selon une deuxième variante, le câble conducteur est sectionné en deux endroits et deux manchons de jonction, reliés entre eux par une portion de câble conducteur neuf, sont interposés puis comprimés, à l'aide d'une presse hydraulique, pour réparer et rétablir les propriétés du câble conducteur.

La première famille de procédés de réparation est la plus simple à mettre en oeuvre et la moins coûteuse. Mais son application est limitée à la réparation d'une dégradation incluant un petit nombre de brins sectionnés.

La deuxième famille de procédés de réparation est à éviter autant que possible parce qu'elle engage des moyens de mise en oeuvre plus importants et un temps d'intervention plus long.

Par ailleurs, de plus en plus de câbles conducteurs de lignes à haute ou très haute tension comportent au moins un brin tubulaire contenant des fibres optiques, pour la transmission de données d'information en plus du transport et/ou de la distribution d'électricité. Ce sont par exemple des câbles de garde à fibres optiques, dits câbles OPGW (de l'anglais « OPtical Ground Wire »), tels que le câble de type THYM 94, ou des câbles optiques conducteurs de phase, dits câbles OPPC (de l'anglais « OPtical Phase Conductor »).

Il est bien évident que la deuxième famille de procédés de réparation précitée n'est pas applicable aux câbles conducteurs à fibres optiques puisqu'une section complète de câble rompt la transmission des données d'information par fibres optiques qui ne peut pas être récupérée par un manchon de jonction. Pour ce type de câble, lorsque la première famille de procédés de réparation n'est pas applicable, c'est le remplacement complet du câble conducteur endommagé entre deux pylônes ou entre un pylône et une installation de poste électrique qui doit être alors envisagé. L'intervention résultante est très longue et très coûteuse, notamment bien plus longue et bien plus coûteuse que la deuxième famille précitée, elle-même plus longue et plus coûteuse que la première famille précitée.

Il peut ainsi être souhaité de prévoir un procédé de réparation d'un câble conducteur d'électricité qui permette de s'affranchir d'au moins une partie des problèmes et contraintes précités.

Il est donc proposé un procédé de réparation d'un câble conducteur d'électricité, le câble conducteur comportant une pluralité de brins conducteurs enroulés en au moins un toron et une partie de ces brins conducteurs étant sectionnée au moins en surface externe du câble conducteur sur une portion longitudinale limitée du câble conducteur de sorte que cette portion longitudinale limitée comporte les deux extrémités sectionnées de chaque brin conducteur sectionné, le procédé comportant :
- l'enroulement d'une première couche de garniture préformée de réparation à brins conducteurs autour et au contact électromécanique de la portion longitudinale limitée du câble conducteur comportant lesdites extrémités sectionnées de chaque brin conducteur sectionné ; et
- l'enroulement d'une deuxième couche de garniture préformée de réparation à brins conducteurs autour et au contact électromécanique de la première couche de garniture préformée.

Ainsi, l'enroulement de la deuxième couche de garniture, autour et au contact électromécanique de la première couche, permet d'éviter d'avoir recours à la deuxième famille de procédés de réparation, ou au remplacement de câble conducteur lorsqu'il s'agit notamment d'un câble à fibres optiques, dans bien des cas hors du champ d'application de la première famille de procédés de réparation, pour un coût et un temps d'intervention qui sont certes légèrement plus élevés que ceux de la première famille de procédés de réparation, mais en tout cas nettement moins élevés que ceux de la deuxième famille de procédés de réparation, et encore moins élevés que ceux d'un remplacement de câble. L'expérience montre que cette solution innovante permet de réparer de façon satisfaisante un câble conducteur présentant jusqu'à 80 % de brins conducteurs sectionnés en première couche superficielle, ou répartis entre les deux premières couches superficielles le cas échéant. Il en résulte qu'une telle solution peut être envisagée dès lorsqu'une proportion de brins sectionnés en superficie de câble conducteur est comprise entre 33 % et 80 %.

De façon optionnelle, l'enroulement de la deuxième couche de garniture préformée se fait sur une longueur de cette deuxième couche inférieure à celle de la première couche de garniture préformée.

De façon optionnelle également, l'enroulement de la première couche de garniture préformée et/ou de la deuxième couche de garniture préformée comporte l'enroulement de brins conducteurs formés en au moins une bande de réparation en brins collés préformés.

De façon optionnelle également :
- l'enroulement de la première couche de garniture préformée comporte l'enroulement de brins conducteurs en aluminium ou alliage d'aluminium ; et
- l'enroulement de la deuxième couche de garniture préformée comporte l'enroulement de brins conducteurs en acier aluminé.

De façon optionnelle également :
- l'enroulement de la première couche de garniture préformée se fait dans un premier sens hélicoïdal d'enroulement, de part et d'autre d'une partie centrale prédéterminée de la portion longitudinale limitée du câble conducteur ; et
- l'enroulement de la deuxième couche de garniture préformée se fait dans un deuxième sens hélicoïdal d'enroulement opposé au premier sens hélicoïdal d'enroulement, de part et d'autre de la partie centrale prédéterminée de la portion longitudinale limitée du câble conducteur.

De façon optionnelle également, un procédé de réparation d'un câble conducteur d'électricité selon l'invention peut en outre comporter, entre l'enroulement de la première couche de garniture préformée et celui de la deuxième couche de garniture préformée :
- l'enduction d'une graisse conductrice sur la première couche de garniture préformée ; et
- le brossage, à l'aide d'une brosse métallique, de la première couche de garniture préformée enduite de graisse conductrice.

De façon optionnelle également, un procédé de réparation d'un câble conducteur d'électricité selon l'invention peut en outre comporter, avant l'enroulement de la première couche de garniture préformée, un enroulement d'au moins une couche de ruban conducteur, par exemple un ruban adhésif en aluminium ou alliage d'aluminium, autour de la portion longitudinale limitée du câble conducteur comportant les extrémités sectionnées de brins conducteurs du câble conducteur.

De façon optionnelle également, un procédé de réparation d'un câble conducteur d'électricité selon l'invention peut en outre comporter :
- avant l'enroulement de ladite au moins une couche de ruban conducteur, le brossage, à l'aide d'une brosse métallique, de la portion longitudinale limitée du câble conducteur comportant les extrémités sectionnées de brins conducteurs du câble conducteur ; et/ou
- entre l'enroulement de ladite au moins une couche de ruban conducteur et celui de la première couche de garniture préformée :
   - l'enduction d'une graisse conductrice sur ladite au moins une couche de ruban conducteur, et
   - le brossage, à l'aide de la brosse métallique, de ladite au moins une couche de ruban conducteur enduite de graisse conductrice.

Il est également proposé un câble conducteur d'électricité comportant :
- une pluralité de brins conducteurs enroulés en au moins un toron, une partie de ces brins conducteurs étant sectionnée au moins en surface externe du câble conducteur sur une portion longitudinale limitée du câble conducteur de sorte que cette portion longitudinale limitée comporte les deux extrémités sectionnées de chacun des brins conducteurs sectionnés ;
- une première couche de garniture préformée de réparation à brins conducteurs enroulée autour et au contact électromécanique de la portion longitudinale limitée du câble conducteur comportant lesdites extrémités sectionnées des brins conducteurs sectionnés ;
comportant en outre une deuxième couche de garniture préformée de réparation à brins conducteurs enroulée autour et au contact électromécanique de la première couche de garniture préformée.

De façon optionnelle, un câble conducteur d'électricité selon l'invention peut en outre comporter au moins un brin tubulaire contenant au moins une fibre optique, ce brin tubulaire à fibre(s) optique(s) étant séparé de la surface externe du câble conducteur par au moins un enroulement de brins conducteurs comportant les brins conducteurs sectionnés.

L'invention sera mieux comprise à l'aide de la description qui va suivre, donnée uniquement à titre d'exemple et faite en se référant aux dessins annexés dans lesquels :
- la figure 1 représente schématiquement en perspective un exemple de portion de câble conducteur d'électricité,
- la figure 2 illustre la section spécifique d'un câble conducteur à fibres optiques OPGW de type THYM 94,
- la figure 3 représente schématiquement en vue longitudinale une portion de câble conducteur d'électricité à brins sectionnés,
- la figure 4 représente schématiquement en vue longitudinale la portion de câble conducteur d'électricité de la figure 3 selon un mode de réalisation de l'invention, c'est-à-dire après réparation, et
- la figure 5 illustre les étapes successives d'un procédé de réparation d'un câble conducteur d'électricité tel que celui de la figure 3, selon un mode de réalisation de l'invention, pour l'obtention d'un câble réparé tel que le câble dont une portion est illustrée sur la figure 4.

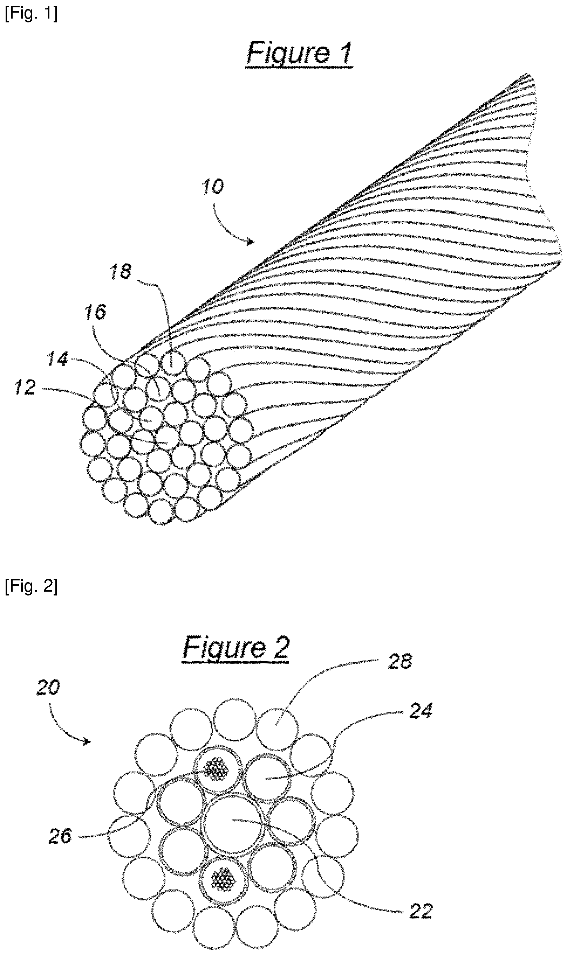

La portion de câble illustrée sur la figure 1 est constituée d'un conducteur nu 10 comportant lui-même plusieurs brins conducteurs disposés en toron et en couches concentriques de sens hélicoïdaux alternés, ces brins étant à sections de formes prédéterminées telles que des sections circulaires, trapézoïdales ou en « Z ». Cette structure, conforme aux normes européennes EN 50182, EN 50540 et EN 62219 est celle généralement retenue pour les câbles conducteurs de courant électrique à haute tension HTB qui présentent un diamètre de quelques centimètres. A titre d'exemple, un conducteur nu référencé 570-AL4 selon cette norme présente 61 brins en almelec (alliage d'aluminium, de magnésium et de silicium) de sections circulaires 3,45 mm disposés en quatre couches autour d'un brin central pour un diamètre total de 31,05 mm avec une tolérance de 1 %. A titre d'exemple également, correspondant par ailleurs à l'illustration de la figure 1, un conducteur nu référencé 288-AL4 selon cette norme présente 37 brins en almelec de sections circulaires 2,80 mm disposés en trois couches autour d'un brin central pour un diamètre total de 19,6 mm avec une tolérance de 1 %. D'autres configurations et matériaux à base d'aluminium, d'aluminium recuit ou d'alliage d'aluminium (par exemple en almelec ou en alliage d'aluminium et de zirconium) sont encore possibles selon les normes EN 50182, EN 50540 et EN 62219.

Plus précisément, le conducteur nu 10 référencé 288-AL4 comporte :
- un brin central 12 formant l'axe longitudinal du câble,
- une première couche de six brins 14 disposés hélicoïdalement autour du brin central 12,
- une deuxième couche de douze brins 16 disposés hélicoïdalement autour de la première couche en sens inverse, et
- une troisième couche de dix-huit brins 18 disposés hélicoïdalement autour de la deuxième couche en sens inverse.

Le tout forme un câble conducteur spiralé, c'est-à-dire à toron simple.

Les brins 12, 14, 16 et 18 sont enserrés de telle sorte que seule une portion de surface de chaque brin 18 appartenant à la troisième et dernière couche est en contact avec le milieu atmosphérique pour former la surface spécifique externe du conducteur nu 10. Le reste des brins 12, 14, 16 et 18 forme un volume intérieur du câble, destiné à conduire un courant électrique.

Il convient en outre de noter que le conducteur nu 10 n'est pas anodisé. Cela signifie qu'il n'a pas subi de traitement de sa surface spécifique externe visant à la couvrir d'une couche supplémentaire protectrice et isolante par oxydation anodique.

Conformément à l'illustration spécifique de la figure 2, un câble conducteur peut aussi comporter des brins tubulaires de fibres optiques.

Ainsi, le câble conducteur nu 20 de type THYM 94 dont une section est représentée sur cette figure comporte :
- un brin central 22 formant l'axe longitudinal du câble, de diamètre maximal et en acier galvanisé,
- une première couche interne de sept brins enroulés hélicoïdalement autour du brin central 22, dont cinq brins conducteurs 24 en acier galvanisé et deux brins tubulaires 26 en tube d'acier comportant vingt-quatre fibres optiques chacun, ces brins 24 et brins tubulaires 26 étant de diamètre inférieur au diamètre maximal du brin central 22, et
- une deuxième couche externe de quinze brins 28 en alliage d'aluminium enroulés hélicoïdalement autour de la première couche en sens inverse.

Le tout forme également un câble conducteur spiralé, c'est-à-dire à toron simple.

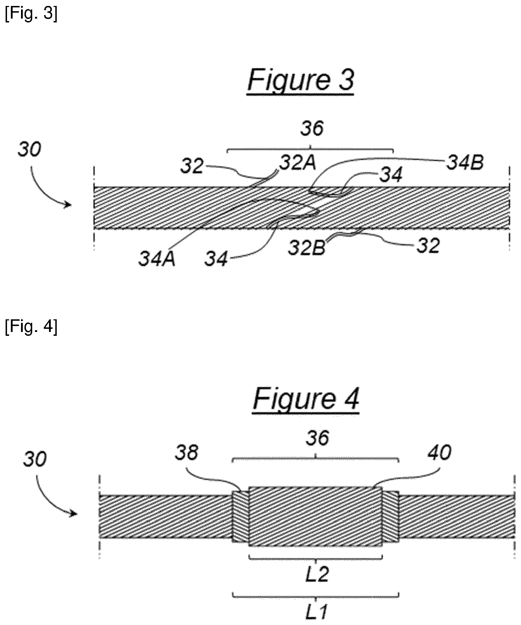

Une portion de câble conducteur spiralé 30, pouvant par exemple correspondre à l'un quelconque des deux câbles précédemment détaillés, est représentée schématiquement en vue longitudinale sur la figure 3. On y voit que certains brins, notamment au moins deux brins conducteurs 32 et 34 de la couche externe, sont sectionnés sur une portion longitudinale limitée 36 du câble conducteur 30 de sorte que cette portion longitudinale limitée 36 comporte les deux extrémités sectionnées de chaque brin conducteur sectionné. Notamment elle comporte les deux extrémités sectionnées 32A et 32B du brin conducteur 32, ainsi que les deux extrémités sectionnées 34A et 34B du brin conducteur 34.

Un tel câble conducteur 30 endommagé nécessite une intervention en réparation. Le résultat d'une telle réparation, lorsqu'elle est réalisée conformément aux principes généraux de la présente invention, est illustré par la figure 4. Pour qu'une telle réparation soit possible lorsqu'il s'agit d'un câble conducteur à brins tubulaires de fibres optiques, il est optionnellement avantageux que chaque brin tubulaire à fibre(s) optique(s) soit séparé de la surface externe du câble conducteur par au moins un enroulement de brins conducteurs comportant les brins conducteurs sectionnés.

Dans la figure 4, la portion longitudinale limitée 36 dans laquelle le câble conducteur 30 est endommagé est recouverte d'une première couche 38 de garniture préformée de réparation à brins conducteurs. Cette dernière est enroulée autour et au contact électromécanique de la portion longitudinale limitée 36 du câble conducteur 30.

De plus, La première couche 38 de garniture préformée est elle-même recouverte d'une deuxième couche 40 de garniture préformée de réparation à brins conducteurs. Cette dernière est enroulée autour et au contact électromécanique de la première couche 38 de garniture préformée.

La première couche 38 de garniture préformée est par exemple constituée d'un enroulement de brins conducteurs en aluminium ou alliage d'aluminium, par exemple l'alliage d'aluminium 6101, pour remplir une première fonction de maintien de la conductivité électrique de la portion longitudinale limitée 36 dans laquelle le câble conducteur 30 est endommagé, tandis que la deuxième couche 40 de garniture préformée est par exemple constituée d'un enroulement de brins conducteurs en acier aluminé ou équivalent, par exemple de l'acier ACS Alumoweld (marque déposée), pour remplir une deuxième fonction de renforcement mécanique de cette conductivité électrique maintenue.

De façon optionnelle mais avantageuse, l'enroulement de la deuxième couche 40 de garniture préformée se fait sur une longueur L2 inférieure à la longueur L1 de la première couche 38 de garniture préformée.

Par ailleurs, l'enroulement de chaque couche 38 ou 40 de garniture préformée peut se faire brin par brin ou, en variante, par bande(s) de réparation en brins collés préformés, par exemple plusieurs bandes de quatre brins préformés et collés entre eux chacune.

Dans l'exemple non limitatif de la figure 4, l'enroulement de la première couche 38 de garniture préformée se fait dans un premier sens hélicoïdal opposé à celui de la couche externe du câble conducteur 30. L'enroulement de la deuxième couche 40 de garniture préformée se fait quant à lui dans un deuxième sens hélicoïdal opposé au premier sens hélicoïdal de la première couche, c'est-à-dire dans le même sens hélicoïdal que celui de la couche externe du câble conducteur 30.

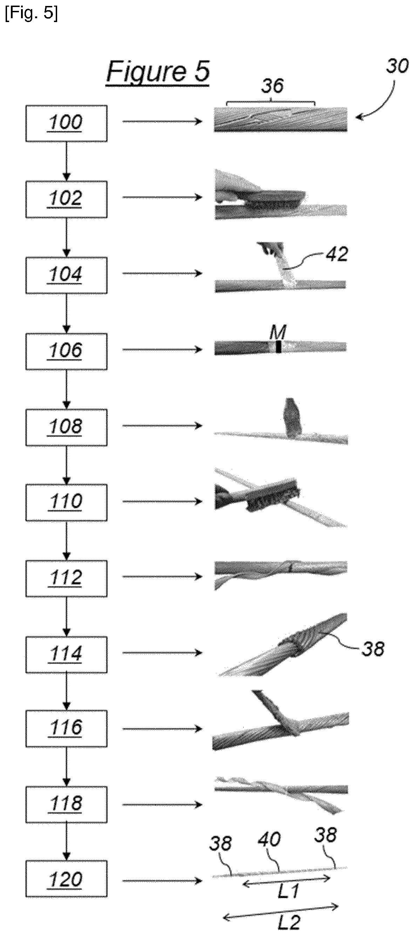

Un procédé de réparation d'un câble conducteur d'électricité, conformément à un mode de réalisation préféré de la présente invention, va maintenant être détaillé en référence à la figure 5.

Au cours d'une première étape 100 de repérage, alors que le câble conducteur 30 est par exemple monté et tendu entre deux pylônes, ou entre un pylône et une installation de poste électrique de réseau de transport ou de distribution d'électricité, la zone à réparer est repérée. Elle correspond par exemple à la portion longitudinale limitée 36 mentionnée précédemment. On voit dans l'exemple de la figure 5 que plusieurs brins de la couche externe du câble conducteur 30 endommagé sont sectionnés, toutes les extrémités sectionnées de brins sectionnés étant incluses dans la portion longitudinale limitée 36 à réparer.

Au cours d'une étape 102 suivante, la surface externe du câble conducteur 30 est nettoyée à l'aide d'une brosse métallique de part et d'autre des brins sectionnés, c'est-à-dire par exemple sur toute la surface externe de la portion longitudinale limitée 36.

Au cours d'une étape 104 suivante, on enroule au moins une couche de ruban conducteur 42, par exemple un ruban adhésif en aluminium ou alliage d'aluminium, autour de la portion longitudinale limitée 36. Cette étape permet de maintenir les brins sectionnés en place. L'utilisation du ruban conducteur 42 peut être plus spécifiquement limitée à la zone précisément occupée par les extrémités de brins sectionnées dans la portion longitudinale limitée 36.

Au cours d'une étape 106 suivante, on repère un point central d'enroulement de la première couche 38 de garniture préformée à l'aide d'une marque M à peu près au centre de l'enroulement de ruban conducteur 42. A partir de cette marque M, deux repères supplémentaires A et B équidistants de M et distants entre eux de la distance L1 peuvent être marqués pour repérer la longueur de la première couche 38 de garniture préformée.

Au cours d'une étape 108 suivante et si nécessaire, le câble conducteur 30 est préalablement nettoyé puis enduit de graisse conductrice au moins sur la ou les couche(s) de ruban conducteur 42, par exemple sur toute la longueur L1 repérée par les marques A et B. Il est possible d'utiliser une graisse conductrice de type pâte de contact telle que la pâte NETOXAL G (marque déposée). Il convient avantageusement de laisser la marque M bien visible. Avantageusement également, la graisse conductrice présente en outre des propriétés mécaniques de grippage pour s'opposer à tout glissement des surfaces entre lesquelles elle s'interpose, ce qui est le cas de la pâte NETOXAL G.

Au cours d'une étape 110 suivante, le câble conducteur 30 enduit de graisse conductrice et grippante entre les marques A et B, ou au moins sur la ou les couche(s) de ruban conducteur 42, est nettoyé à l'aide de la brosse métallique pour enlever d'éventuels résidus d'alumine.

Au cours d'étapes 112 et 114 suivantes, la première couche 38 de garniture préformée est enroulée autour et au contact électromécanique de la portion longitudinale limitée, par exemple par enroulements successifs de plusieurs bandes de réparation en brins collés préformés. Dans ce cas, chaque bande de réparation est marquée d'un repère en son centre qu'il convient de faire coïncider avec la marque M pour qu'elle puisse couvrir le câble conducteur sur toute la longueur L1 entre les marques A et B. Une première bande de réparation est enroulée à l'étape 112 dans un premier sens hélicoïdal d'enroulement, par exemple opposé au sens d'enroulement de la couche externe du câble conducteur 30, de part et d'autre de la marque M. L'opération est répétée avec autant de bandes de réparation que nécessaire pour parvenir à un recouvrement complet du câble conducteur 30 entre les marques A et B à l'issue de l'étape 114.

Au cours d'une étape 116 suivante et si nécessaire, la première couche 38 de garniture préformée est enduite de graisse conductrice et grippante, par exemple sur toute sa longueur L1 ou au moins sur la longueur L2. Il convient avantageusement de laisser son repère central, i.e. par exemple celui des bandes de réparation qui la constituent, bien visible. Puis la première couche 38 de garniture préformée enduite de graisse conductrice et grippante est nettoyée à l'aide de la brosse métallique pour enlever d'éventuels résidus d'alumine.

Au cours d'étapes 118 et 120 suivantes, la deuxième couche 40 de garniture préformée est enroulée autour et au contact électromécanique de la première couche 38 de garniture préformée, par exemple par enroulements successifs de plusieurs bandes de réparation en brins collés préformés. Dans ce cas, chaque bande de réparation est marquée d'un repère en son centre qu'il convient de faire coïncider avec le repère central de la première couche 38 de garniture préformée pour qu'elle puisse la couvrir sur toute la longueur L2. Une première bande de réparation est enroulée à l'étape 118 dans un deuxième sens hélicoïdal d'enroulement, par exemple opposé au premier sens hélicoïdal d'enroulement de la première couche 38 de garniture préformée, de part et d'autre de son repère central. L'opération est répétée avec autant de bandes de réparation que nécessaire pour parvenir à un recouvrement complet de la première couche 38 de garniture préformée de part et d'autre de son repère central et sur toute la longueur L2 de la deuxième couche 40 de garniture préformée à l'issue de l'étape finale 120 de réparation.

Il apparaît clairement qu'un procédé de réparation tel que celui décrit précédemment permet le renforcement d'un câble conducteur d'électricité à brins sectionnés, notamment lorsqu'il est monté en tension mécanique entre deux pylônes ou entre un pylône et une installation de poste électrique de réseau de transport ou de distribution d'électricité, de façon très simple et à moindres frais. Il a été expérimenté qu'un tel procédé convient pour réparer des câbles conducteurs présentant jusqu'à 80 % de brins conducteurs sectionnés en première couche superficielle, ou répartis entre les deux premières couches superficielles. Notamment, des essais mécaniques ont démontré une tenue de la réparation à plus de 95 % de la charge de rupture du câble conducteur. De plus, des essais optiques ont démontré l'absence d'affaissement de signal optique jusqu'à 70 % de la charge de rupture du câble conducteur lorsque ce dernier est pourvu de brins tubulaires à fibres optiques.

On notera par ailleurs que l'invention n'est pas limitée au mode de réalisation décrit précédemment.

En particulier, le procédé de réparation détaillé précédemment s'applique aussi aux câbles toronnés, selon les mêmes principes aisément adaptables.

Il apparaîtra plus généralement à l'homme de l'art que diverses modifications peuvent être apportées au mode de réalisation décrit ci-dessus, à la lumière de l'enseignement qui vient de lui être divulgué. Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Procédé de réparation d'un câble (30) conducteur d'électricité, le câble conducteur (30) comportant une pluralité de brins conducteurs enroulés en au moins un toron et une partie (32, 34) de ces brins conducteurs étant sectionnée au moins en surface externe du câble conducteur (30) sur une portion longitudinale limitée (36) du câble conducteur (30) de sorte que cette portion longitudinale limitée (36) comporte les deux extrémités sectionnées (32A, 32B, 34A, 34B) de chaque brin conducteur sectionné (32, 34), le procédé comportant l'enroulement (112, 114) d'une première couche (38) de garniture préformée de réparation à brins conducteurs autour et au contact électromécanique de la portion longitudinale limitée (36) du câble conducteur (30) comportant lesdites extrémités sectionnées (32A, 32B, 34A, 34B) de chaque brin conducteur sectionné (32, 34), **caractérisé en ce qu'**il comporte en outre l'enroulement (118, 120) d'une deuxième couche (40) de garniture préformée de réparation à brins conducteurs autour et au contact électromécanique de la première couche (38) de garniture préformée.

2. Procédé de réparation d'un câble (30) conducteur d'électricité selon la revendication 1, dans lequel l'enroulement (18, 120) de la deuxième couche (40) de garniture préformée se fait sur une longueur (L2) de cette deuxième couche (40) inférieure à celle (L1) de la première couche (38) de garniture préformée.

3. Procédé de réparation d'un câble (30) conducteur d'électricité selon la revendication 1 ou 2, dans lequel l'enroulement (112, 114, 118, 120) de la première couche (38) de garniture préformée et/ou de la deuxième couche (40) de garniture préformée comporte l'enroulement de brins conducteurs formés en au moins une bande de réparation en brins collés préformés.

4. Procédé de réparation d'un câble (30) conducteur d'électricité selon l'une quelconque des revendications 1 à 3, dans lequel :
- l'enroulement (112, 114) de la première couche (38) de garniture préformée comporte l'enroulement de brins conducteurs en aluminium ou alliage d'aluminium ; et
- l'enroulement (118, 120) de la deuxième couche (40) de garniture préformée comporte l'enroulement de brins conducteurs en acier aluminé.

5. Procédé de réparation d'un câble (30) conducteur d'électricité selon l'une quelconque des revendications 1 à 4, dans lequel :
- l'enroulement (112, 114) de la première couche (38) de garniture préformée se fait dans un premier sens hélicoïdal d'enroulement, de part et d'autre d'une partie centrale prédéterminée (M) de la portion longitudinale limitée (36) du câble conducteur (30) ; et
- l'enroulement (112, 114) de la deuxième couche (40) de garniture préformée se fait dans un deuxième sens hélicoïdal d'enroulement opposé au premier sens hélicoïdal d'enroulement, de part et d'autre de la partie centrale prédéterminée (M) de la portion longitudinale limitée (36) du câble conducteur (30).

6. Procédé de réparation d'un câble (30) conducteur d'électricité selon l'une quelconque des revendications 1 à 5, comportant en outre, entre l'enroulement (112, 114) de la première couche (38) de garniture préformée et celui (118, 120) de la deuxième couche (40) de garniture préformée :
- l'enduction (116) d'une graisse conductrice sur la première couche (38) de garniture préformée ; et
- le brossage (116), à l'aide d'une brosse métallique, de la première couche (38) de garniture préformée enduite de graisse conductrice.

7. Procédé de réparation d'un câble (30) conducteur d'électricité selon l'une quelconque des revendications 1 à 6, comportant en outre, avant l'enroulement (112, 114) de la première couche (38) de garniture préformée, un enroulement (104) d'au moins une couche de ruban conducteur (42), par exemple un ruban adhésif en aluminium ou alliage d'aluminium, autour de la portion longitudinale limitée (36) du câble conducteur (30) comportant les extrémités sectionnées (32A, 32B, 34A, 34B) de brins conducteurs (32, 34) du câble conducteur (30).

8. Procédé de réparation d'un câble (30) conducteur d'électricité selon la revendication 7, comportant en outre :
- avant l'enroulement (104) de ladite au moins une couche de ruban conducteur (42), le brossage (102), à l'aide d'une brosse métallique, de la portion longitudinale limitée (36) du câble conducteur (30) comportant les extrémités sectionnées (32A, 32B, 34A, 34B) de brins conducteurs (32, 34) du câble conducteur (30) ; et/ou
- entre l'enroulement (104) de ladite au moins une couche de ruban conducteur (42) et celui (112, 114) de la première couche (38) de garniture préformée :
• l'enduction (108) d'une graisse conductrice sur ladite au moins une couche de ruban conducteur (42), et
• le brossage (110), à l'aide de la brosse métallique, de ladite au moins une couche de ruban conducteur (42) enduite de graisse conductrice.

9. Câble (30) conducteur d'électricité comportant :
- une pluralité de brins conducteurs enroulés en au moins un toron, une partie (32, 34) de ces brins conducteurs étant sectionnée au moins en surface externe du câble conducteur (30) sur une portion longitudinale limitée (36) du câble conducteur (30) de sorte que cette portion longitudinale limitée (36) comporte les deux extrémités sectionnées (32A, 32B, 34A, 34B) de chacun des brins conducteurs sectionnés (32, 34) ;
- une première couche (38) de garniture préformée de réparation à brins conducteurs enroulée autour et au contact électromécanique de la portion longitudinale limitée (36) du câble conducteur (30) comportant lesdites extrémités sectionnées (32A, 32B, 34A, 34B) des brins conducteurs sectionnés (32, 34) ;
**caractérisé en ce qu'**il comporte en outre une deuxième couche(40) de garniture préformée de réparation à brins conducteurs enroulée autour et au contact électromécanique de la première couche (38) de garniture préformée.

10. Câble (30) conducteur d'électricité selon la revendication 9, comportant en outre au moins un brin tubulaire (26) contenant au moins une fibre optique, ce brin tubulaire à fibre(s) optique(s) étant séparé de la surface externe du câble conducteur (30) par au moins un enroulement de brins conducteurs comportant les brins conducteurs sectionnés (32, 34).
